Europäisches Patentamt

(19) European Patent Office

Office européen des brevets

(11) Numéro de publication : **0 117 223**
**B1**

(12) **FASCICULE DE BREVET EUROPÉEN**

(45) Date de publication du fascicule du brevet :
**16.06.87**

(21) Numéro de dépôt : **84810019.4**

(22) Date de dépôt : **11.01.84**

(51) Int. Cl.⁴ : **C 05 F 11/02**, A 61 K 35/10

(54) **Procédé pour la production d'acides humiques et fulviques et de sous-produits à partir de tourbe, de terrains tourbeux et de matières organiques humifiées.**

(30) Priorité : **25.01.83 CH 392/83**

(43) Date de publication de la demande :
**29.08.84 Bulletin 84/35**

(45) Mention de la délivrance du brevet :
**16.06.87 Bulletin 87/25**

(84) États contractants désignés :
**AT BE CH DE FR GB IT LI LU NL SE**

(56) Documents cités :
**BE-A- 817 432**
**FR-A- 2 041 748**
**US-A- 2 992 093**
**US-A- 3 111 404**
**US-A- 3 985 536**
**US-A- 4 261 725**

(73) Titulaire : **Mimpex GmbH**
**Neuer Jungfernstieg 7/8**
**D-2000 Hamburg 36 (DE)**

(72) Inventeur : **Savoini, Guido**
**Via Vall'Orba 35**
**CH-6977 Ruvigliana (CH)**

(74) Mandataire : **Baggiolini, Raimondo et al**
**Racheli & Fiammenghi Via San Gottardo 15**
**CH-6900 Lugano (CH)**

EP 0 117 223 B1

## Description

La présente invention a pour objet un procédé pour la production des acides humiques et fulviques et de sous-produits à partir de tourbe, de terrains tourbeux, de matières organiques humifiées naturellement ou artificiellement, pour utilisation agricole, chimique, pharmaceutique, médicale, industrielle et pour d'autres réalisations et elle concerne aussi les produits et sous-produits obtenus par le procédé.

Le procédé en question est « écologiquement propre » et se différencie en cela des procédés connus qui sont généralement polluants, complexes et non rationnels en ne prévoyant pas l'extraction globale des substances utiles à partir de la matière première.

La matière première à traiter peut être : un terrain normal, un terrain tourbeux, de la tourbe, une matière organique naturelle ou artificielle en phase d'humification même amenée artificiellement, du fumier, un engrais organique d'ordures, de vers, de litières d'aviculture ou autre.

Les produits qu'on obtient par le procédé sont :

1) des solutions brutes d'acides humiques et fulviques ;

2) des suspensions brutes prêtes à l'utilisation des humates et fulvates de potassium ou des matières premières pour l'obtention de leurs dérivés ;

3) des solutions fertilisantes de chlorure ou de sulfate de potassium « activées » par des substances humiques ;

4) des panneaux fertilisants organiques minéraux potassiques ;

5) des boues à pourcentage élevé d'humates et de fulvates à degrés variables d'humidité et dépourvues de minéraux (fer, aluminium, etc.).

Procédés pour la production d'acides humiques et fulviques et de sous-produits à partir de tourbe, de terrains tourbeux et de matières organiques humifiées sont connus.

Le brevet FR-A-2 041 748 prévoit un triage des matières à traiter en séparant la matière utile sélectionnée de celle dépourvue d'intérêt ainsi qu'une fragmentation, un criblage et une adjonction d'eau.

Le brevet US-A-3 985 536 décrit un procédé qui comprend :

l'addition d'une solution alcaline en particulier de potasse caustique à la matière utile, en vue de former une suspension pour l'extraction des substances humiques et fulviques contenues dans cette suspension ;

l'introduction de la suspension dans un réacteur en la maintenant sous agitation pendant une durée et à une température adaptées pour l'extraction optimale des acides humiques et fulviques contenus.

Ces deux procédés connus ne permettent pas l'extraction à haute concentration des substances utiles à partir de la matière première, à la différence du procédé selon la présente invention qui est caractérisé :

a) par la subdivision de la matière utile fragmentée et criblée selon la technique connue (1) (2) en deux cycles : le premier (3, 4, 5, 6, 6', 6", 7, 8, 9, 10, 11, 12, 13, 14, 15) en vue de la préparation d'acides humiques et fulviques et de fertilisants ou matières pour la préparation de fertilisants, le second (19, 20', 20", 21, 4, 5, 16) pour retirer une boue riche en acides humiques et fulviques et dépourvue de minéraux (fer, aluminium, etc.) ;

b) pour le premier cycle, par l'addition à la matière fragmentée et criblée, selon la technique déjà connue (1) (2) d'eau (3) et d'alcali dans un réacteur (4) pour former une suspension et par l'introduction de la suspension dans un décanteur (6, 6', 6") en la laissant au repos pour la sédimentation, c'est-à-dire pour la séparation en différentes couches du produit décanté, en particulier pour la séparation d'une couche inférieure (6") dense, d'une couche intermédiaire (6) prête pour l'utilisation et d'une couche supérieure (6') fine ;

c) par la séparation de la couche supérieure fine (6') selon l'alinéa b) contenant les sels des acides humiques et fulviques, avec décantations ultérieures successives jusqu'à obtention de limpidité en séparant pour son traitement ultérieur la phase liquide de la phase solide qui est ajoutée à la couche intermédiaire (6) selon l'alinéa b) ;

d) par le traitement de la solution limpide (6') selon l'alinéa b) dans une colonne (8) avec résine échangeuse de cations permettant aux anions de former les acides humiques et fulviques désirés ;

e) par la régénération (9) de la résine échangeuse de décantations en obtenant un sous-produit utilisable comme fertilisant ;

f) par la séparation (10) de la fraction de la couche intermédiaire (6) selon l'alinéa b) en l'utilisant comme matière intermédiaire pour la production de fertilisants (13) solides et liquides ;

g) par la formation d'un panneau fertilisant ou d'un granulat de la couche inférieure dense (6") selon l'alinéa b), en la desséchant et la mélangeant avec d'autres fertilisants pour utilisation agricole (12) ;

h) pour le second cycle selon l'alinéa a), on effectue une désagrégation (19) (broyage) en présence d'eau, une décantation (20', 20"), la fraction minérale inférieure (panneau 20") se séparant de la fraction organique supérieure (20'), soumise à une filtration (21) pour son introduction dans un réacteur (4) avec renvoi au premier cycle et extraction (5) d'une boue riche en acides humiques et fulviques (16) dépourvue de substances minérales pour la production de complexes fertilisants ou de mélanges.

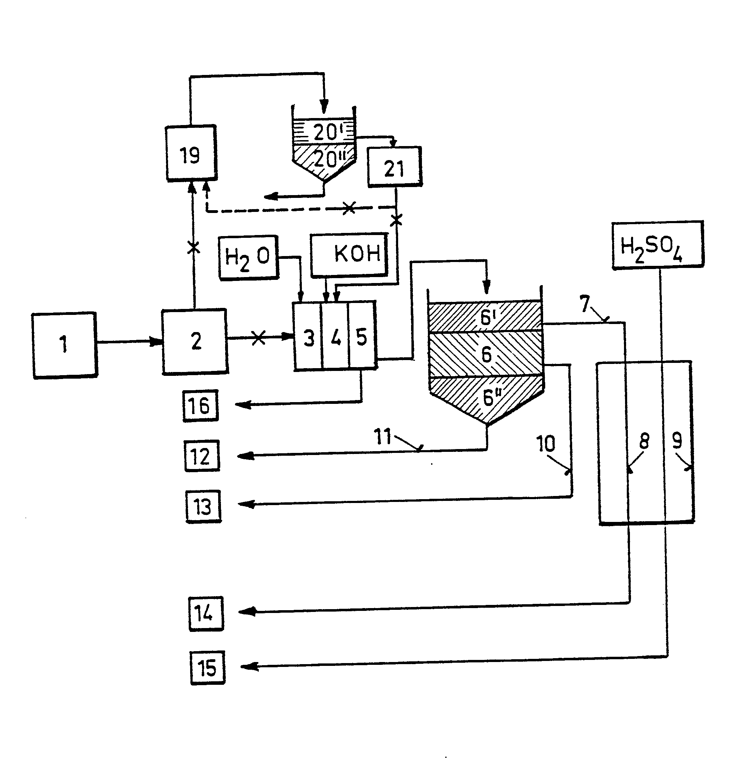

On donnera ci-après un exemple pratique de réalisation du procédé selon l'invention subdivisé en deux cycles, le premier en vue de la préparation d'acides humiques et fulviques et de fertilisants ou matières pour la préparation de fertilisants, le second pour obtenir une boue à pourcentage élevé d'humates et de fulvates et dépourvue de minéraux (fer, aluminium, etc.) en référence au schéma par blocs du dessin annexé.

Le procédé comprend les phases successives suivantes :

a) un triage (1) préalable, en soit connu, de la matière à traiter assurant la sélection de la matière utile séparée de celle dépourvue d'intérêt ;

b) une fragmentation, un criblage (2) de la matière sélectionnée avec adjonction d'eau et une solution alcaline afin d'obtenir la suspension qui vient divisée et traitée avec subdivision en deux cycles : le premier (3, 4, 5, 6, 7, 8, 9, 10, 11, 12, 13, 14, 15) normal, le second (19, 20', 20", 21, 4, 5, 16) pour retirer la boue riche en acides humiques et fulviques et dépourvue de minéraux (fer, aluminium, etc.) comme indiqué ci-dessus ;

c) l'addition d'eau (3) à la matière sélectionnée selon l'alinéa b) et pour le premier cycle en vue de former une suspension aqueuse pour l'extraction des substances humiques et fulviques contenues ;

d) l'addition éventuelle à la suspension aqueuse selon l'alinéa c) de matière inorganique si la suspension ne devait pas en contenir ;

e) l'introduction de la suspension aqueuse selon l'alinéa d) dans un réacteur (4) et son maintien sous agitation pendant une durée et à une température adaptées pour l'extraction optimale (5) des acides humiques et fulviques contenus ;

f) l'introduction de la suspension aqueuse selon l'alinéa e) dans un décanteur (6, 6', 6") en laissant au repos pour la sédimentation c'est-à-dire pour la séparation en divers états du produit décanté, en particulier pour la séparation d'une couche inférieure (6") dense, d'une couche intermédiaire (6) prête pour son utilisation et d'une couche supérieure fine (6') ;

g) après séparation en couches, la couche supérieure fine selon l'alinéa f) contenant les sels des acides humiques et fulviques est soumise à une décantation ultérieure jusqu'à obtention de la limpidité et on sépare la phase liquide pour son traitement ultérieur de la phase solide qui est ajoutée à la couche intermédiaire (6) selon l'alinéa (f) ;

h) la solution limpide (6') selon l'alinéa g) est traitée dans une colonne (8) avec résine échangeuse de cations permettant aux anions de former les acides humiques et fulviques désirés ;

i) la régénération (9) de la résine échangeuse de cations en obtenant un sous-produit utilisable comme fertilisant ;

k) la fraction de la couche intermédiaire (6) selon l'alinéa f) est séparée pour l'utilisation de cette couche comme matière intermédiaire pour la production de fertilisants (13) solides et liquides ;

l) la formation d'un panneau fertilisant ou d'un granulat à partir de la couche inférieure dense (6") selon l'alinéa f), par dessèchement de cette couche et mélange avec d'autres fertilisants pour une utilisation agricole (12) ;

m) pour le second cycle selon l'alinéa b) on procède à une désagrégation (19) (broyage) en présence d'eau, à une décantation (20', 20") qui sépare la fraction minérale inférieure (panneau 20") de la couche organique supérieure (20'), à une filtration (21) et à l'admission dans le réacteur (4) destiné aussi au premier cycle en vue de l'extraction (5) d'une boue riche en acides humiques et fulviques (16) et dépourvue de substances minérales pour la production de complexes fertilisants ou de mélanges.

En ce qui concerne l'alinéa b), point 2, on peut ajouter que :

la matière dont on peut extraire les substances humiques et fulviques a diverses origines, diverses compositions et situations, de sorte que, suivant ses caractéristiques, elle doit subir le traitement préliminaire de sélection pour l'isoler de la matière dépourvue d'intérêt.

Afin d'obtenir une extraction optimale et de bien traiter la matière à fragmentation et granulométrie déterminée à cet effet, on emploie le criblage.

En ce qui concerne l'alinéa c), numéro de référence 3, on peut préciser que pour la préparation de la suspension aqueuse de réaction, quand la matière à traiter se mélange avec la solution d'extraction, il se forme une suspension dont la densité varie avec le rapport solide/liquide.

Plus ce rapport est faible, plus la suspension est fluide, tandis que plus le rapport est élevé, plus la suspension est dense.

Le procédé indiqué n'impose pas de limites au rapport parce que ce rapport dépend du type de la matière à traiter.

En ce qui concerne l'alinéa d), numéro de référence 4, on peut ajouter que la suspension préparée est placée dans un réacteur 4 et maintenue sous agitation pour un minimum de 12 heures.

La température détermine le temps d'extraction.

Le temps d'extraction optimal à 20 °C est environ à 24 heures.

Au-delà l'extraction ne convient plus parce que le taux d'extraction varie asymptotiquement.

Les réactifs qui assurent l'extraction des substances humiques et fulviques des matières qui les contiennent (point 5) sont divers ainsi que le degré d'extraction à égalité de concentration et du temps d'extraction. Pour des raisons d'opportunité avec le procédé indiqué on préfère utiliser une solution de potasse hydratée à concentration variable. On prépare une telle solution en diluant une solution commerciale ou en dissolvant le sel technique de façon à obtenir la solution désirée selon les caractéristiques de la matière à traiter, les caractéristiques du produit désiré ou les deux à la fois. A la solution potassique ainsi obtenue, on peut éventuellement ajouter une partie proportionnelle de carbonate de potassium.

En ce qui concerne l'alinéa f), après extraction, la suspension aqueuse pompée dans un décanteur doit être laissée au repos pour la sédimentation de la matière plus grossière qui n'a pas de rôle spécifique.

Après un temps déterminé, selon les caractéristiques de la suspension aqueuse en réaction, se forment, comme indiqué ci-dessus, trois couches : une couche inférieure 6″ formant une suspension très dense ; une couche intermédiaire 6, formant une suspension optimale prête pour l'utilisation ; et une couche supérieure 6′ formant une suspension fine.

La suspension fine d'humates et de fulvates de potassium est mise à décanter jusqu'à sa limpidité pour être traitée ultérieurement. Le sédiment est ajouté à la couche intermédiaire.

La solution limpide obtenue en 7 est envoyée pour son passage sur une colonne 8 remplie de résine à fort échange de cations, par exemple le produit désigné « amberlite IR 120 » qui retient le potassium. On obtient ainsi une solution d'acides humiques et fulviques qui peuvent trouver des applications en agriculture, en chimie, en pharmacie, en médecine, en zootechnique, etc.

Le processus de régénération de la résine échangeuse de cations est réalisable avec l'acide sulfurique ou chlorhydrique. On obtient alors après régénération une solution de sulfate ou de chlorure de potassium.

Une telle solution peut être utilisée comme fertilisant potassique à forte activité.

On n'a pas prévu de façon opportune le lavage de la résine avant la régénération dans le but d'introduire dans les solutions potassiques les substances humiques restées dans la colonne après l'échange de cations.

La suspension intermédiaire 6 contient :
1) des humates et fulvates de potassium ;
2) une fraction minérale.

La fraction minérale qui représente la matière auxiliaire d'addition est un élément déterminant pour l'activité de la suspension intermédiaire. Une telle fraction permet en effet une augmentation de l'absorption anionique par une partie des racines des plantes en formant un complexe avec les substances humiques afin d'améliorer l'activité de ces dernières en créant un système à plus grande affinité pour les sites réactifs des protéines de membrane.

Une telle réactivité augmentée dépend d'orientations particulières ou de dispositions moléculaires créées par la fraction minérale.

Une telle réactivité s'explique par une activité améliorée des molécules comme par exemple le phytochrome qui règle la perméabilité des membranes cellulaires riches en amino-acides et par suite facilement orientables par des complexes à structure moléculaire polarisante.

Sur le fond du récipient de décantation et aussi sur le fond du réacteur se dépose une fraction grossière 6″ de matière imprégnée de solution humico-potassique.

Ce sédiment qui est désigné comme un panneau a un contenu élevé de substance organique, de substance humique et de potassium d'intérêt agronomique remarquable et toute sa manipulation (séchage, mélangeage avec d'autres fertilisants, mise en paillettes) peut s'effectuer de façon économique même si l'implantation de l'extraction n'est pas installée aux environs d'une agriculture utilisatrice en état d'absorber directement le panneau.

En ce qui concerne le second cycle pour la préparation d'une boue à concentration élevée en humates et fulvates de potassium (alinéa m) et points 19, 20′, 20″, 21, 4, 5, 16), au lieu de mettre en suspension la matière contenant les acides humiques dans la solution d'extraction, il est possible de la broyer puis de la pétrir avec le produit alcalin concentré même à une température différente de la température ambiante et de laisser au repos la pâte afin que progresse l'extraction.

La pâte humique ainsi obtenue est une matière optimale de réaction pour la production de fertilisants complexes, simples, binaires ou ternaires, contenant des quantités variables et désirées d'acides humiques solubles.

## Revendications

1. Procédé pour la production d'acides humiques et fulviques et de sous-produits à partir de tourbe, de terrains tourbeux, de matières organiques humifiées naturellement ou artificiellement, pour utilisation agricole, chimique, pharmaceutique, médicale, industrielle et pour autres réalisations, comprenant :

un triage des matières à traiter en séparant la matière utile sélectionnée de celle dépourvue d'intérêt ;

une fragmentation et un criblage de la matière utile sélectionnée ;

l'addition d'une solution alcaline en vue de former une suspension pour l'extraction des substances humiques et fulviques contenues dans cette suspension ;

l'introduction de la suspension dans un réacteur en la maintenant sous agitation pendant une durée et à une température adaptées en vue de l'extraction optimale des acides humiques et fulviques contenus ;
caractérisé :

a) par la subdivision de la matière utile fragmentée et criblée selon la technique connue (1) (2) en deux cycles : le premier (3, 4, 5, 6, 6′, 6″, 7, 8, 9, 10, 11, 12, 13, 14, 15) en vue de la préparation d'acides humiques et fulviques et de fertilisants ou matières pour la préparation de fertilisants, le second (19, 20′, 20″, 21, 4, 5, 16) pour retirer une boue riche en acides humiques et fulviques et dépourvue de minéraux (fer, aluminium, etc.) ;

b) pour le premier cycle, par l'addition à la matière fragmentée et criblée, selon la technique déjà connue (1) (2) d'eau (3) et d'alcali, dans un réacteur (4) pour former une suspension et par l'introduction de la suspension dans un décanteur (6, 6′, 6″) en la laissant au repos pour la sédimentation, c'est-à-dire pour la séparation en différentes couches du produit décanté, en particulier pour la séparation d'une couche inférieure (6″) dense, d'une couche intermédiaire (6) prête pour l'utilisation et d'une couche supérieure (6′) fine ;

c) par la séparation de la couche supérieure fine (6') selon l'alinéa b) contenant les sels des acides humiques et fulviques, avec décantations ultérieures successives jusqu'à obtention de limpidité, en séparant pour son traitement ultérieur la phase liquide de la phase solide qui est ajoutée à la couche intermédiaire (6) selon l'alinéa b) ;

d) par le traitement de la solution limpide (6') selon l'alinéa b) dans une colonne (8) avec résine échangeuse de cations permettant aux anions de former les acides humiques et fulviques désirés ;

e) par la régénération (9) de la résine échangeuse de cations en obtenant un sous-produit utilisable comme fertilisant ;

f) par la séparation (10) de la fraction de la couche intermédiaire (6) selon l'alinéa b) en l'utilisant comme matière intermédiaire pour la production de fertilisants (13) solides et liquides ;

g) par la formation d'un panneau fertilisant ou d'un granulat de la couche inférieure dense (6") selon l'alinéa b), en la desséchant et la mélangeant avec d'autres fertilisants pour utilisation agricole (12) ;

h) pour le second cycle selon l'alinéa a), on effectue une désagrégation (19) (broyage) en présence d'eau, une décantation (20', 20"), la fraction minérale inférieure (panneau 20") se séparant de la fraction organique supérieure (20'), soumise à une filtration (21) pour son introduction dans un réacteur (4) avec renvoi au premier cycle et extraction (5) d'une boue riche en acides humiques et fulviques (16) dépourvue de substances minérales pour la production de complexes fertilisants ou de mélanges.

2. Procédé selon la revendication 1, caractérisé par le fait que la solution alcaline selon l'alinéa b) est constituée par de l'hydrate de potassium, avec additions éventuelles de carbonate de potassium.

3. Procédé selon la revendication 1, caractérisé en ce que le traitement selon l'alinéa b) prévoit que la suspension aqueuse ou la boue sont mises en place dans le réacteur (4) sous agitation pendant un minimum de 12 heures à la température voulue jusqu'à une extraction optimale.

4. Procédé selon les revendications 1 et 2, caractérisé en ce que la colonne d'échange de cations selon l'alinéa d) est constituée par une résine à forte capacité d'échange qui retient les ions métalliques.

5. Procédé selon les revendications 1 et 4, caractérisé en ce que la régénération de la résine selon l'alinéa e) est réalisée par l'acide sulfurique ou chlorhydrique avec obtention d'une solution de sulfate ou de chlorure de potassium utilisable comme fertilisant potassique à grande activité, étant donné que le lavage de la résine, avant la régénération est évité dans le but d'introduire dans les solutions potassiques les substances humiques et fulviques restées dans la colonne après l'échange de cations.

## Claims

1. Process for the production of humic and fulvic acids and of by products from peat, peaty soils, naturally or artificially humified organic materials, for agricultural, chemical, pharmaceutical, medical and industrial use and for other developments, consisting of :

a sorting of the materials to be processed, separating the selected useful material from that devoid of interest ;

a breaking up and a sifting of the selected useful material ;

the addition of an alkaline solution for the purpose of forming a suspension for the extraction of the humic and fulvic substances contained in this suspension ;

the introduction of the suspension into a reactor, keeping it under agitation for a time and at a temperature suitable for the purpose of optimal extraction of the humic and fulvic acids present ; characterised :

a) by the subdivision of the useful matter broken up and sifted in accordance with known technology (1) (2) in two cycles : the first (3, 4, 5, 6, 6', 6", 7, 8, 9, 10, 11, 12, 13, 14, 15) for the purpose of the preparation of humic and fulvic acids and of fertilisers or materials for the preparation of fertilisers, the second (19, 20', 20", 21, 4, 5, 16) to obtain a mud rich in humic and fulvic acids and devoid of minerals (iron, aluminium etc.) ;

b) for the first cycle, by the addition to the broken up and sifted material in accordance with already known technology (1) (2) of water (3) and of alkali, in a reactor (4) to form a suspension and by the introduction of the suspension into a settling tank (6, 6', 6") leaving it for sedimentation i. e. for the separation of the settled product into various layers, in particular for the separation of a dense lower layer (6"), an intermediate layer (6) ready for use and a fine upper layer (6') ;

c) by the separation of the fine upper layer (6') referred to in paragraph b) containing the salts of the humic and fulvic acids, with further successive sedimentations until clarity is obtained, separating for its subsequent treatment the liquid phase from the solid phase which is added to the intermediate layer (6) referred to in paragraph b) ;

d) by the treatment of the clear solution (6') referred to in paragraph b) in a column (8) with cation exchange resin enabling the anions to form the desired humic and fulvic acids ;

e) by the regeneration (9) of the cation exchange resin, obtaining a by-product usable as a fertiliser ;

f) by the separation (10) of the fraction of the middle layer (6) referred to in paragraph b), using it as intermediary matter for the production of solid and liquid fertilisers (13) ;

g) by the formation of a fertilising « panel » or an aggregate from the dense lower layer (6") referred to in paragraph b) by drying it and mixing it with other fertilisers for agricultural use (12) ;

h) for the second cycle referred to in paragraph a) a disaggregation (19) (crushing) in the presence of water is carried out, then a settling (20', 20"), the lower mineral portion (panel 20") separating from the upper organic portion (20') subjected to a filtration (21) for its introduction into a reactor (4) with return to the first cycle and extraction (5) of a mud rich in humic and fulvic acids (16) devoid of mineral substances for the production of fertiliser complexes or of mixtures.

2. Process in accordance with Claim 1, characterised by the fact that the alkaline solution referred to in paragraph b) consists of potassium hydroxide with possible additions of potassium carbonate.

3. Process in accordance with Claim 1, characterised in that the treatment referred to in paragraph b) lays down that the aqueous suspension or the mud are placed in the reactor (4) under agitation for a minimum of 12 hours at the desired temperature until an optimal extraction.

4. Process in accordance with Claims 1 and 2, characterised in that the cation exchange column referred to in paragraph d) consists of a resin with high exchange capacity which retains the metallic ions.

5. Process in accordance with Claims 1 and 4, characterised in that the regeneration of the resin referred to in paragraph e) is achieved by sulphuric or hydrochloric acid with the production of a solution of potassium sulphate or chloride usable as a highly active potassic fertiliser, given that the washing of the resin prior to regeneration is avoided for the purpose of introducing into the potassic solutions any humic and fulvic substances remaining in the column after the exchange of cations.

## Patentansprüche

1. Verfahren zur Herstellung von Humus- und Fulvensäuren sowie Nebenprodukten aus Torf, torfhaltigen Böden, natürlich oder künstlich angefeuchteten organischen Stoffen zur landwirtschaftlichen, chemischen, pharmazeutischen, medizinischen, industriellen Verwendung und für andere Ausführungen, umfassend

eine Aussonderung der zu behandelnden Stoffe durch Trennen des ausgewählten geeigneten Stoffes von dem ohne Interesse ;

eine Zerkleinerung und Siebung des ausgewählten geeigneten Stoffes ;

die Beifügung einer alkalischen Lösung zur Bildung einer Suspension für die Gewinnung der in dieser Suspension enthaltenen Humus- und Fulvensubstanzen ;

die Einleitung der Suspension in einen Reaktor unter andauerndem Rühren während einer Dauer und bei einer Temperatur, die zur optimalen Gewinnung der enthaltenen Humus- und Fulvensäuren geeignet sind ;

gekennzeichnet

a) durch die Unterteilung des zerkleinerten und gesiebten geeigneten Stoffes in bekannter Weise (1) (2) in zwei Zyklen : den ersten (3, 4, 5, 6, 6', 6", 7, 8, 9, 10, 11, 12, 13, 14, 15) im Hinblick auf die Zubereitung von Humus- und Fulvensäuren und von Düngern oder Stoffen zur Zubereitung von Düngern, den zweiten (19, 20', 20", 21, 4, 5, 16), um einen Schlamm abzuziehen, der reich an Humus- und Fulvensäuren ist und keine Mineralien (Eisen, Aluminium usw.) enthält ;

b) für den ersten Zyklus durch Zugabe von Wasser (3) und Alkali zu dem zerkleinerten und gesiebten Stoff nach dem bekannten Verfahren (1) (2) in einem Reaktor (4) zur Bildung einer Suspension, und durch Einleitung der Suspension in einen Dekantierer (6, 6', 6"), wobei man sie für die Ablagerung ruhen läßt, d. h. für die Trennung des dekantierten Erzeugnisses in verschiedene Schichten, insbesondere für die Trennung einer dichten Unterschicht (6"), einer für die Verwendung bereiten Zwischenschicht (6) und einer feinen Oberschicht (6') ;

c) durch die Trennung der feinen Oberschicht (6') nach Absatz b), die die Salze der Humus- und Fulvensäuren enthält, unter weiterem aufeinanderfolgendem Dekantieren bis zum Erreichen von Durchsichtigkeit, wobei für ihre spätere Behandlung die Flüssigphase von der Festphase getrennt wird, die der Zwischenschicht (6) nach Absatz b) zugeführt wird ;

d) durch die Behandlung der durchsichtigen Lösung (6') nach Absatz b in einer Säule (8) mit Kationen-Austauscherharz, das den Anionen ermöglicht, die gewünschten Humus- und Fulvensäuren zu bilden ;

e) durch die Regeneration (9) des Kationen-Austauscherharzes, wobei ein als Dünger verwendbares Nebenprodukt erhalten wird ;

f) durch die Trennung (10) der Zwischenschicht-Fraktion (6) nach Absatz b) unter Verwendung derselben als Zwischenstoff für die Erzeugung von festen und flüssigen Düngern (13) ;

g) durch die Bildung einer Düngerplatte oder eines Granulats aus der dichten Unterschicht (6") nach Absatz b), wobei man diese austrocknet und mit anderen Düngern zur landwirtschaftlichen Verwendung mischt ;

h) für den zweiten Zyklus nach Absatz a) führt man eine Zersetzung (19) (Vermahlung) in Anwesenheit von Wasser durch, eine Dekantierung (20', 20"), wobei der untere mineralische Teil (Tafel 20") sich von dem oberen organischen Teil (20') trennt, der für seine Einleitung in einen Reaktor (4) einer Filtrierung (21) unterworfen wird, unter Rückleitung in den ersten Zyklus und Gewinnung (5) eines an Humus- und Fulvensäuren (16) reichen Schlammes ohne mineralische Substanzen für die Erzeugung von düngenden Komplexen oder Mischungen.

2. Verfahren nach Anspruch 1, dadurch gekennzeichnet, daß die alkalische Lösung nach Absatz b) aus Kaliumhydroxid und gegebenenfalls Zusätzen von Kaliumcarbonat besteht.

3. Verfahren nach Anspruch 1, dadurch gekennzeichnet, daß die Behandlung nach Absatz b) vorsieht, daß die wässrige Suspension der Schlamm in den Reaktor (4) verbracht wird unter Rühren während minimal 12 Stunden bei der gewünschten Temperatur bis zu einer optimalen Gewinnung.

4. Verfahren nach Anspruch 1 und 2, dadurch gekennzeichnet, daß die Kationen-Austauschersäule nach Absatz d) aus einem Harz mit hoher Austauschleistung besteht, das die metallischen Ionen zurückhält.

5. Verfahren nach Anspruch 1 und 4, dadurch gekennzeichnet, daß die Regeneration des Harzes nach Absatz e) durch die Schwefelsäure oder Salzsäure durchgeführt wird unter Erhalt einer Kaliumsulfat- oder -chloridlösung, die als kaliumhaltiger Dünger mit großer Aktivität verwendbar ist, da das Waschen des Harzes vor der Regeneration vermieden wird mit dem Ziel, in die kaliumhaltigen Lösungen die Humus- und Fulvensubstanzen einzuführen, die nach dem Kationenaustausch in der Säule verblieben sind.